Europäisches Patentamt

European Patent Office

Office européen des brevets

(19)

(11) Numéro de publication : **0 099 823**
**B1**

(12)

# FASCICULE DE BREVET EUROPÉEN

(45) Date de publication du fascicule du brevet :
27.05.87

(21) Numéro de dépôt : 83401452.4

(22) Date de dépôt : 13.07.83

(51) Int. Cl.⁴ : **H 04 J 15/00, G 02 B 6/34**

(54) **Multiplexeur-démultiplexeur de longueurs d'ondes compact et à filtrage adaptable.**

(30) Priorité : 16.07.82 FR 8212439

(43) Date de publication de la demande :
01.02.84 Bulletin 84/05

(45) Mention de la délivrance du brevet :
27.05.87 Bulletin 87/22

(84) Etats contractants désignés :
**AT BE CH DE FR GB IT LI LU NL SE**

(56) Documents cités :
**EP-A- 0 037 787**
**EP-A- 0 040 706**
**EP-A- 0 050 555**
**ELECTRONICS LETTERS, vol. 16, no. 23, 6 novembre 1980, pages 869-870, Londres, GB. T. TANAKA: "Simple structure high isolation multi/demultiplexer"**

(73) Titulaire : **INSTRUMENTS S.A.**
**25, avenue de l'Opéra**
**F-75001 Paris (FR)**

(72) Inventeur : **Laude, Jean-Pierre**
**Rue des Graveriots Saint Cyr la Riviere**
**F-91690 Saclas (FR)**
Inventeur : **Flamand, Jean**
**33 rue Gustave Robin**
**F-92290 Chatenay Malabry (FR)**
Inventeur : **Gautherin, Jean-Claude**
**4 rue Paul Roger**
**F-94370 Sucy-en-Brie (FR)**

(74) Mandataire : **Phélip, Bruno et al**
**c/o Cabinet Harlé & Phélip 21, rue de la Rochefoucauld**
**F-75009 Paris (FR)**

## Description

La présente invention concerne un multiplexeur-démultiplexeur de longueurs d'onde dans une fibre optique de transmission, plus particulièrement destiné à constituer un composant d'extrêmité dans une installation de télécommunications par fibres optiques.

Dans une telle installation chaque information est émise sous la forme d'une lumière modulée, puis introduite à l'extrêmité d'une fibre optique de transmission, puis recueillie à son autre extrêmité pour être captée par un récepteur qui reconstitue l'information.

Les installations de télécommunications par fibres optiques doivent généralement être prévues pour la transmission d'informations dans les deux sens, les composants d'extrêmité servant alors à la fois à introduire dans la fibre au moins un signal en provenance d'au moins un émetteur situé à la même extrémité de la fibre, et à extraire et séparer les signaux en provenance des émetteurs situés à l'autre extrémité. Bien entendu les divers signaux, dans un sens ou dans l'autre, sont portés par des lumières de longueurs d'onde différentes, chacune n'occupant généralement qu'une bande étroite de longueurs d'onde.

Les composants d'extrêmité sont donc parcourus par des lumières différentes en longueurs d'onde mais surtout très différentes en intensité. Ainsi les lumières à faire entrer dans l'extrémité de la fibre sont très fortes car elles proviennent d'émetteurs situés à cette même extrémité de la fibre, tandis que les différentes lumières reçues sont affaiblies par un long cheminement dans la fibre. Parmi les signaux reçus on observe aussi des niveaux très différents d'intensité selon la puissance des émetteurs ou la distance de transmission.

Les récepteurs sont conçus pour pouvoir travailler à des niveaux optiques très faibles compte tenu des affaiblissements normaux dans les fibres de transmission, et sont donc particulièrement sensibles à toute lumière parasite en provenance par exemple des émetteurs proches, ou même des autres lumières reçues et qui ont conservé une plus forte intensité.

Il en résulte que dans un même composant d'extrêmité on pourra avoir besoin de degrès de filtrage très différents, soit par exemple pour empêcher des parasites par réflexion ou diffusion issus de la lumière intense des émetteurs proches de venir perturber les sorties vers les récepteurs, soit encore pour bien séparer des longueurs d'onde également affaiblies, ou pour isoler des longueurs d'onde difficiles à filtrer. Le plus souvent, plus un signal arrive atténué à l'extrémité d'une fibre de transmission, plus le filtrage de sa bande de longueur d'onde doit être complet dans le composant d'extrêmité. Mais il peut aussi survenir qu'il faille spécialement améliorer le filtrage d'une longueur d'onde particulière en raison de difficultés spécifiques pour la filtrer par des moyens usuels extérieurs.

La présente invention permet de réaliser, dans un même composant, des degrés de filtrage différents pour des longueurs d'onde ou des bandes de longueurs d'onde différentes, et permet donc de mieux adapter les filtrages aux caractéristiques particulières des différentes longueurs d'onde à traiter.

EP-A-0 050 555 décrit un dispositif multiplexeur-démultiplexeur de longueurs d'onde dans une fibre optique de transmission, destiné à être utilisé à une extrémité de la fibre pour y faire pénétrer une lumière en provenance d'un émetteur, et/ou en extraire et séparer, vers des récepteurs, des lumières en provenance d'émetteurs, situés à l'autre extrémité de la fibre de transmission. Ce dispositif comporte un miroir sphérique sélectif disposé sur le trajet optique des faisceaux issus de la fibre de transmission ou y aboutissant, ledit miroir étant déterminé pour séparer par transmission ou réflexion une bande ne contenant qu'une seule des longueurs d'onde transmises par la fibre.

Dans le dispositif selon EP-A-0 050 555 il n'y a qu'un seul passage à travers le filtre.

Electronics Letters, vol. 16, n° 23, 1980, pages 869-870 décrit un dispositif multiplexeur-démultiplexeur dans lequel il est prévu une structure utilisant une lentille à gradient d'indice et deux miroirs d'un seul côté. Il est connu que la focale d'une lentille à gradient d'indice varie avec la longueur d'onde, en conséquence avec un tel dispositif les couplages entre fibres sur un grand domaine spectral subissent des pertes.

L'invention concerne un dispositif multiplexeur-démultiplexeur de longueurs d'onde dans une fibre optique de transmission, destiné à être utilisé à une extrémité de la fibre pour y faire pénétrer une lumière en provenance d'un émetteur, et/ou en extraire et séparer, vers des récepteurs, des lumières en provenance d'émetteurs, situés à l'autre extrémité de la fibre de transmission et comportant un miroir sphérique sélectif disposé sur le trajet optique des faisceaux issus de la fibre de transmission ou y aboutissant, ledit miroir étant déterminé pour séparer par transmission ou réflexion une bande ne contenant qu'une seule des longueurs d'onde transmises par la fibre, caractérisé en ce qu'il comprend au moins un miroir sphérique sélectif à couches diélectriques, disposé sur le trajet optique des faisceaux issus de la fibre de transmission ou y aboutissant, et deux systèmes réfléchissants sur les extrémités opposées du dispositif dans chacun desquels sont ménagées des ouvertures à travers lesquelles passe la lumière focalisée tandis que les lumières non focalisées sont réfléchies plusieurs fois à travers au moins l'un des miroirs sélectifs.

L'invention sera mieux comprise en se référant à une série de modes de réalisation particuliers donnés à titre d'exemple et représentés par les dessins annexés qui sont tous des schémas optiques simplifiés.

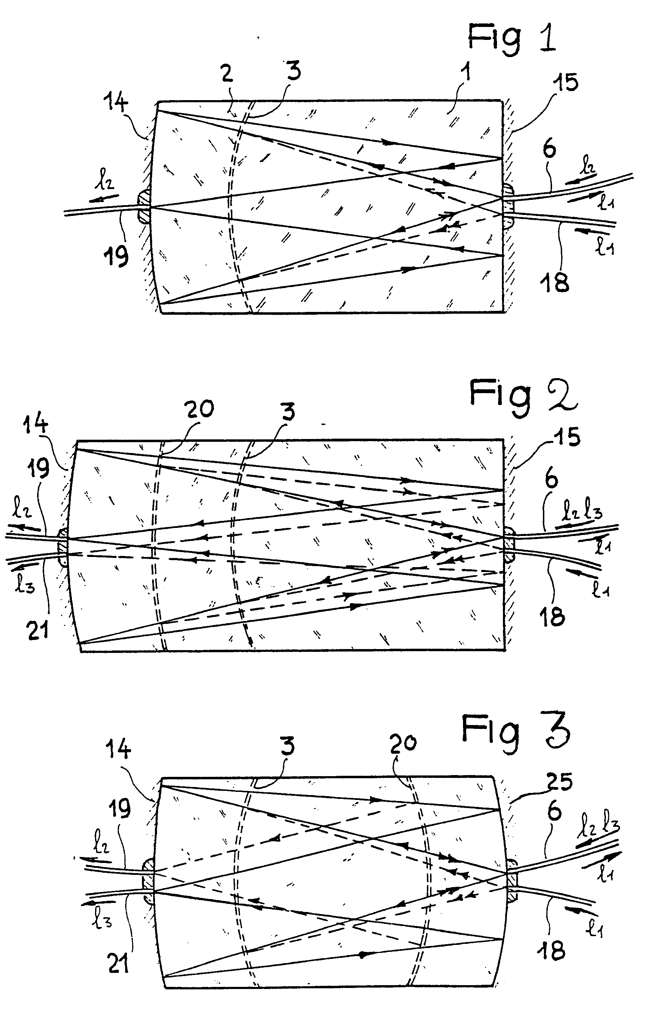

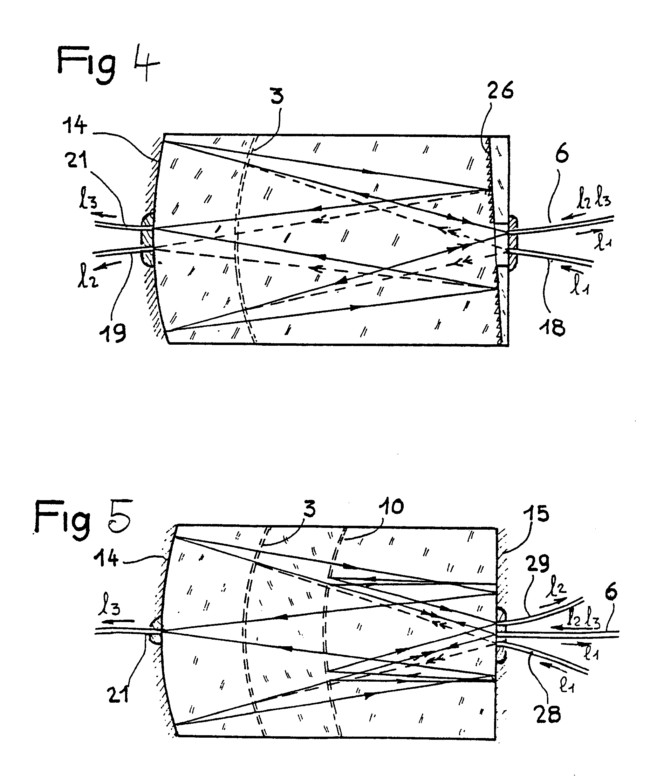

Les figures 1 à 4 représentent des configurations dans lesquelles certains trajets optiques traversent complètement le dispositif et permettent d'obtenir un isolement optique de certaines sorties. Le dispositif de la figure 1 comporte deux miroirs sphériques et un miroir plan de renvoi. Celui de la figure 2 comporte trois miroirs sphériques et un miroir plan de renvoi. La figure 3 représente une variante du dispositif précédent avec une disposition relative différente des miroirs sphériques, et un miroir de renvoi également sphérique. La figure 4 est comparable à la figure 1, mais le miroir de renvoi y est remplacé par un réseau de diffraction par réflexion.

La figure 5 représente un cas réel de réalisation constituant une combinaison des différentes possibilités de configurations précédentes.

Les configurations représentées aux figures 1 à 4 présentent toutes les quatre la particularité que la fibre de transmission 6 est appliquée sur le premier bloc transparent dans une zone centrale non réfléchissant d'une face qui par ailleurs constitue un système totalement réfléchissant, plan, concave, ou réseau de diffraction par réflexion. On peut ainsi disposer au moins certaines fibres réceptrices sur la face opposée du dispositif, ce qui présente un très gros intérêt dans le cas où le dispositif est également utilisé pour diriger vers la fibre 6 une longueur d'onde $l_1$ en provenance d'un émetteur local par une fibre 18, comme représenté sur les quatre figures 1 à 4.

Le dispositif le plus simple, figure 1, présente une structure avec deux blocs 1 et 2 séparés par un miroir sélectif 3 centré au voisinage immédiat de l'extrêmité de la fibre 6. Le miroir 3 n'est réfléchissant que pour une bande de longueurs d'onde contenant $l_1$. Ainsi le faisceau $l_1$ issu de la fibre 18 se réfléchit sur 3 et est focalisé sur l'extrêmité de 6 et toute la lumière $l_1$ est introduite dans la fibre de transmission. Par contre, le faisceau $l_2$ issu de 6 traverse sans déviation le miroir 3, puis atteint le miroir 14 qui le réfléchit vers le miroir plan 15 de la face d'entrée après avoir à nouveau traversé 3. Le rayon du miroir 14 est déterminé de telle sorte que l'image finale de l'extrêmité de la fibre 6, après la dernière réflexion sur 154 et nouvelle traversée de 3, se forme au centre non réfléchissant de 14, où est disposée la fibre réceptrice 19.

On notera tout d'abord que la longueur d'onde $l_2$ subit trois filtrages successifs par ses trois traversées du miroir 3 entre la sortie de 6 et l'entrée de 19. Si donc on utilise les fibres 18 et 19 comme fibres de sortie après séparation des deux longueurs d'onde d'une lumière mélangée amenée par 6, les deux longueurs d'onde subissent des degrés de filtrage différents et on peut attribuer préférentiellement un trajet optique à une longueur d'onde déterminée.

Mais on pourra surtout noter que dans le cas où comme sur la figure 3 la lumière $l_1$ est une lumière forte venant d'un émetteur voisin et susceptible d'engendrer de la lumière parasite, cette lumière parasite est au même titre que la lumière directe complètement arrêtée par la barrière du miroir-filtre 3 ; la lumière affaiblie 12 recueillie sur la fibre 19 ne risque donc pas d'être perturbée par de la lumière parasite issue de l'émetteur voisin.

La figure 2 ne diffère de la précédente que par la présence d'un miroir sélectif supplémentaire 20 qui permet d'isoler une longueur d'onde supplémentaire $l_3$, avec un triple filtrage sur 3 par rapport à $l_1$ et un triple filtrage sur 20 par rapport à $l_2$. Les sorties 19 et 21 y sont également entièrement protégées par 3 contre la lumière parasite $l_1$.

Il en est de même à propos de la figure 3 qui ne diffère de la figure 2 que par une disposition relative des miroirs sélectifs. L'utilisation d'un miroir de renvoi sphérique 25 au lieu d'un miroir plan 15 permet une plus grande compacité du dispositif.

On notera à propos de la figure 4 que le dispositif réfléchissant de renvoi peut aussi être un réseau de diffraction plan 26 travaillant par réflexion. C'est alors le réseau qui sépare les deux longueurs d'ondes $l_2$ et $l_3$ recueillies en 18 et 21, toutes les deux avec le même degré relatif de filtrage, et toutes les deux entièrement protégées de la lumière parasite $l_1$.

Bien entendu on peut réunir dans un même dispositif deux ou plus des configurations décrites séparément ci-dessus. C'est ce qui a été effectivement réalisé sur le dispositif représenté à la figure 5. Ici la fibre 6 transmet de son autre extrêmité les longueurs d'onde à recueillir $l_2 = 0,79$ $\mu$m et $l_3 = 0,87$ $\mu$m. La fibre 28 transmet d'un émetteur proche la longueur d'onde $l_1 = 0,83$ $\mu$m à introduire dans la fibre 6. Le faisceau $l_2$ $l_3$ issu de la fibre 6 rencontre d'abord le miroir sphérique sélectif 10 de rayon 40 mm qui a son foyer à l'entrée de 6, et qui constitue un filtre passe haut transparent aux longueurs d'onde supérieures à 0,80 $\mu$m environ. La lumière $l_2$ est donc réfléchie en un faisceau parallèle renvoyé par le miroir 15 et refocalisé par 10 sur la fibre de sortie 29 après un double filtrage de réflexion.

Le miroir 3 de rayon 30 mm et centré sur l'extrêmité de la fibre 6, est également réalisé en filtre passe haut transparent aux longueurs d'onde supérieures à 0,85 $\mu$m environ. Il est donc traversé par le restant du faisceau issu de 6, et de longueur d'onde $l_3$. La lumière $l_3$ réfléchie successivement par le miroir sphérique 14 de rayon 53 mm et le miroir plan 15, est focalisé sur la fibre opposée 21, après trois traversées des miroirs 3 et 10. Enfin la lumière $l_1$ en provenance de la fibre 28 et de l'émetteur traverse le miroir 10 mais est réfléchie par le miroir 3 qui la refocalise aussitôt sur la fibre 6, après double filtrage par rapport à $l_2$. On observera en particulier que la lumière $l_3$, la plus difficile à filtrer, subit ici trois filtrages sur chaque miroir sélectif et est complètement isolée par le miroir 3 de toute lumière parasite $l_1$ en provenance de l'émetteur.

**Revendications**

1. Dispositif multiplexeur-démultiplexeur de longueurs d'onde dans une fibre optique de transmission (6), destiné à être utilisé à une extrémité de la fibre (6) pour y faire pénétrer une lumière en provenance d'un émetteur, et/ou en extraire et séparer, vers des récepteurs, des lumières en provenance d'émetteurs, situés à l'autre extrémité de la fibre de transmission et comportant un miroir sphérique sélectif disposé sur le trajet optique des faisceaux issus de la fibre de transmission ou y aboutissant, ledit miroir étant déterminé pour séparer par transmission ou réflexion une bande ne contenant qu'une seule des longueurs d'onde transmises par la fibre (6), caractérisé en ce qu'il comprend au moins un miroir sphérique sélectif à couches diélectriques (3-10), disposé sur le trajet optique des faisceaux issus de la fibre de transmission (6) ou y aboutissant, et deux systèmes réfléchissants (14, 15) sur les extrémités opposées du dispositif dans chacun desquels sont ménagées des ouvertures à travers lesquelles passe la lumière focalisée tandis que les lumières non focalisées sont réfléchies plusieurs fois à travers au moins l'un des miroirs sélectifs.

2. Dispositif selon la revendication 1, caractérisé en ce que les lumières non focalisées sont réfléchies deux fois sur les systèmes réfléchissants et sont transmises trois fois à travers au moins un filtre sphérique sélectif à couches diélectriques.

3. Dispositif selon l'une des revendications 1 ou 2, caractérisé en ce qu'un des systèmes réfléchissants est un miroir plan (15).

4. Dispositif selon l'une des revendications 1 ou 2, caractérisé en ce qu'un des systèmes réfléchissants est un miroir sphérique (25).

5. Dispositif selon l'une des revendications 1 ou 2, caractérisé en ce qu'un des systèmes réfléchissants est un réseau plan de diffraction (26).

## Claims

1. Device for wavelength multiplexing/demultiplexing in a transmission optical fibre (6), which device is intended to be used at one end of the fibre (6) in order to cause a beam of light originating from an emitter to penetrate therein, and/or to extract and separate therefrom, towards receivers, beams of light originating from emitters situated at the other end of the transmission fibre and comprising a selective spherical mirror disposed on the optical path of the beams emerging from the transmission fibre or arriving thereat, the said mirror being designed to separate by transmission or reflection a band containing only a single one of the wavelengths transmitted by the fibre (6), characterized in that it comprises at least one selective spherical mirror having dielectric layers (3-10), which is disposed on the optical path of the beams emerging from the transmission fibre (6) or arriving thereat, and two reflecting systems (14, 15) on the opposite ends of the device, in each one of which reflecting systems there are formed apertures through which the focused light beam passes, while the unfocused light beams are reflected on a plurality of occasions through at least one of the selective mirrors.

2. Device according to Claim 1, characterized in that the unfocused light beams are reflected on two occasions on the reflecting systems and are transmitted on three occasions through at least one selective spherical filter having dielectric layers.

3. Device according to one of Claims 1 or 2, characterized in that one of the reflecting systems is a plane mirror (15).

4. Device according to one of Claims 1 or 2, characterized in that one of the reflecting systems is a spherical mirror (25).

5. Device according to one of Claims 1 or 2, characterized in that one of the reflecting systems is a plane diffraction grating (26).

## Patentansprüche

1. Einrichtung zum Multiplexen-Entmultiplexen von Wellenlängen in einer optischen Übertragungsfiber (6), die mit einem Ende der Fiber (6) zum Durchlaß eines von einem Sender herrührenden Lichts und/oder zum Entziehen und Trennen von Licht zu Empfängern hin, welches von an dem anderen Ende der Übertragungsfiber befindlichen Sendern herrührt, verwendbar ist und einen selektiven sphärischen Spiegel aufweist, der in dem optischen Weg von Lichtbündeln angeordnet ist, die aus der Übertragungsfiber austreten oder dort enden, wobei der Spiegel zum Trennen durch Durchlaß oder Reflexion eines Bandes bestimmt ist, welches nur eine einzige der durch die Fiber (6) übertragenen Wellenlängen enthält, dadurch gekennzeichnet, daß sie wenigstens einen sphärischen selektiven Spiegel mit dielektrischen Schichten (3-10) umfaßt, die in dem optischen Weg der Bündel angeordnet sind, die aus der Übertragungsfiber (6) heraustreten oder dort enden, sowie zwei reflektierende Systeme (14, 15) auf gegenüberliegenden Enden der Einrichtung umfaßt, in jeder von welchen Öffnungen vorgesehen sind, durch welche das fokussierte Licht hindurchtritt, während das nicht fokussierte Licht mehrfach durch wenigstens einen der selektiven Spiegel reflektiert wird.

2. Einrichtung nach Anspruch 1, dadurch gekennzeichnet, daß das nicht fokussierte Licht zweimal auf den reflektierenden Systemen reflektiert wird und dreimal durch wenigstens ein sphärisches selektives Filter mit dielektrischen Schichten geleitet wird.

3. Einrichtung nach einem der Ansprüche 1 oder 2, dadurch gekennzeichnet, daß eines der reflektierenden Systeme ein Planspiegel (15) ist.

4. Einrichtung nach einem der Ansprüche 1 oder 2, dadurch gekennzeichnet, daß eines der reflektierenden Systeme ein sphärischer Spiegel (25) ist.

5. Einrichtung nach einem der Ansprüche 1 oder 2, dadurch gekennzeichnet, daß eines der reflektierenden Systeme ein ebenes Beugungsgitter (26) ist.

Fig 1

Fig 2

Fig 3

Fig 4

Fig 5